# EUROPÄISCHE PATENTSCHRIFT

(11) **EP 0 514 969 B1**
(45) Veröffentlichungstag und Bekanntmachung des Hinweises auf die Patenterteilung: **18.12.1996**
(21) Anmeldenummer: 92201339.6
(22) Anmeldetag: 12.05.1992
(51) Int. Cl.: H04N 7/14, H04M 1/02

(54) **Fernsprechendgerät**
Telecommunication terminal
Terminal de télécommunication

(30) Priorität: 21.05.1991 DE 4116494
(43) Veröffentlichungstag der Anmeldung: 25.11.1992
(73) Patentinhaber: Philips Patentverwaltung GmbH, 22335 Hamburg (DE); Philips Electronics N.V., 5621 BA Eindhoven (NL)
(72) Erfinder: Liebing, Ullrich, c/o Philips Patentverwalt. GmbH, W-2000 Hamburg 1 (DE); Hirth, Peter, c/o Philips Patentverwalt. GmbH, W-2000 Hamburg 1 (DE); Höflinger, Jürgen, c/o Philips Patentverwalt. GmbH, W-2000 Hamburg 1 (DE); Wekerle, Wilhelm, c/o Philips Patentverwalt. GmbH, W-2000 Hamburg 1 (DE)
(74) Vertreter: Volmer, Georg, Dipl.-Ing.

(56) Entgegenhaltungen:
- EP-A- 0 353 143
- DE-A- 3 625 646

## Beschreibung

Die Erfindung betrifft ein Fernsprechendgerät mit einem Fernsprechhörer und einem im wesentlichen rechteckig geformten Bügel, der zwei zueinanderweisende, seitlich in das Fernsprechendgerät eingreifende Zapfen aufweist und über diese Zapfen im Fernsprechendgerät schwenkbar gelagert sowie durch Arretierungsmittel fixierbar ist.

An Fernsprechendgeräte werden - insbesondere wenn sie zur Bürokommunikation vorgesehen sind - hohe Anforderungen bezüglich Ergonomie und Design gestellt. Aus der Veröffentlichung "Siemens teamset 200 - Design, Ergonomie und konstruktiver Aufbau mikroprozessorgesteuerter Bürotelefonanlagen" von H. Hansbauer, telcom report 5, Heft 5, 1982, Seiten 298 - 302 sind Fernsprechendgeräte bekannt, die einen Fernsprechhörer, ein Bedienfeld und ein Anzeigemittel (Display) aufweisen. Eine gute Lesbarkeit des Bedienfeldes (Tastatur und weitere Bedienelemente) und des Anzeigemittels (Display) bei gleichzeitig guter Bedienbarkeit soll bei den beschriebenen Geräten durch einen halbhohen Anstellwinkel des Bedienfeldes sowie des Anzeigemittels erreicht werden. Für einen professionellen Einsatz, z. B. in Abfrage- oder Vermittlungsstellen, sind solche Lösungen kaum geeignet, da eine Anpassung an individuelle Bedürfnisse von Benutzern nur schlecht möglich ist.

Aus der DE-A-36 25 646 ist ein Teilnehmergerät für Bildfernsprechen bekannt, daß zur Einstellung auf unterschiedliche Körpergrößen der Benutzer einen U-förmigen Bügel aufweist, der an beiden Seiten des Gehäuses des Teilnehmergeräts schwenkbar gelagert ist. Der Bügel kann unter die Unterseite des Gehäuses geschwenkt werden, wo er in verschiedenen Stellungen einrastet und das Gerät anhebt.

Aufgabe der vorliegenden Erfindung ist deshalb, Fernsprechendgeräte der eingangs genannten Art weiter zu verbessern.

Diese Aufgabe wird dadurch gelöst, daß der Bügel zur Bildung einer Auflage für den Fernsprechhörer seitlich am Fernsprechendgerät übersteht.

Durch den als Stütze für das Fernsprechendgerät vorgesehenen Bügel wird eine Variation des Anstellswinkels des Fernsprechendgerätes ermöglicht. Ein Benutzer kann somit den Anstellwinkel des Fernsprechendgerätes leicht auf seine persönlichen Bedürfnisse hin optimieren. Weiterhin kann durch die Verbreiterung des Bügels insbesondere bei Fernsprechendgeräten ohne Gabelschaltung (Abfragestelle, Maklertelefon) eine separate Handapparatauflage entfallen.

Eine Ausgestaltung sieht vor, daß der Bügel horizontal verschiebbar gelagert ist. Hierdurch wird erreicht, daß durch Verschiebung des Bügels die Auflagemöglichkeit wahlweise auf die linke oder rechte Seite des Fernsprechendgerätes verlagerbar ist, wodurch eine Anpassung an die Links- oder Rechtshändigkeit eines Benutzers erfolgen kann.

In einer weiteren vorteilhaften Variante weist das Fernsprechendgerät ein schwenkbar gelagertes Anzeigemittel auf. Bei dieser Ausgestaltung kann der Anstellwinkel des Anzeigemittels unabhängig vom Anstellwinkel des Fernsprechendgeräts vom Benutzer individuell eingestellt werden. Um die Herstellungskosten für solche Fernsprechendgeräte niedrig zu halten, wird vorgeschlagen, daß eine durch den Bügel im Fernsprechendgerät gebildete Achse zugleich die Achse für das schwenkbar gelagerte Anzeigemittel bildet.

Die zur Gewährleistung der Einhaltung eines bestimmten Anstellwinkels vorgesehenen Arretierungsmittel können durch Rastgesperre gebildet werden. Bei Einsatz von Rastgesperren sind je nach Anzahl der Rastungen nur bestimmte Anstellwinkel des Bügels möglich. Bei Einsatz eines Rastgesperres kann die Auflagemöglichkeit auf die andere Seite verlagert werden, indem beispielsweise der Bügel vom Telefon abnehmbar ausgebildet wird, so daß durch ein Abnehmen des Bügels, einem Drehen um 180° und einem Wiederaufstekken die Verlagerung der Auflagemöglichkeit für den Handapparat durchführbar ist.

Eine vorteilhafte stufenlose Einstellbarkeit des Anstellwinkels wird durch den Einsatz von Klemmgesperren, die auf Reibungskräften beruhen, erreicht. Zudem erweist sich die oben vorgeschlagene horizontale Verschiebbarkeit des Bügels bei Einsatz eines Klemmgesperres als problemlos realisierbar.

Im folgenden soll anhand des in den Figuren schematisch dargestellten Ausführungsbeispiels die Erfindung näher beschrieben und erläutert werden.

Es zeigt:
- Fig. 1: eine perspektivische Ansicht eines Fernsprechendgerätes mit verstellbarem Bügel,
- Fig. 2: einen Ausschnitt der Unterseite des Fernsprechendgerätes aus Figur 1.

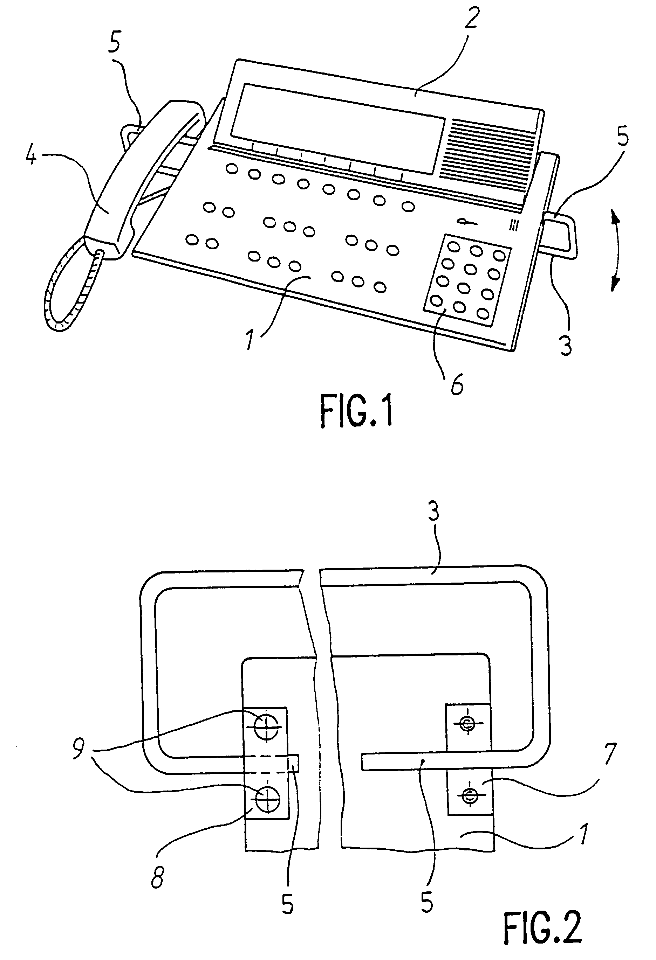

In Fig. 1 ist in perspektivischer Ansicht ein Fernsprechendgerät 1 mit einem im hinteren Teil des Fernsprechendgerätes 1 angebrachten, schwenkbar gelagerten Display 2 dargestellt. Ebenfalls im hinteren Teil des Fernsprechendgerätes 1 ist ein rechteckig geformter Bügel 3 angebracht, wobei eine Längsseite des Bügels 3 durch zwei zueinanderweisende Zapfen 5 gebildet wird, die seitlich gegenüberliegend in das Fernsprechendgerät 1 eingreifen. Die Zapfen 5 des Bügels 3 sind im Fernsprechendgerät schwenkbar gelagert und durch Arretierungsmittel fixierbar. Somit kann der Bügel 3 in verschiedenen Anstellwinkeln gehalten und als Stütze für das Fernsprechendgerät eingesetzt werden. Der Anstellwinkel des Fernsprechendgerätes 1 läßt sich durch Schwenken des Bügels 3 in Richtung des in Fig. 1 angedeuteten Bewegungspfeiles verändern, wodurch in Verbindung mit der Verstellungsmöglichkeit des Displays 2 eine optimale Anpassung an individuelle Bedürfnisse eines Benutzers ermöglicht wird.

Ein Zapfen 5 des Bügels 3 bildet auf einer Seite des Fernsprechendgerätes 1 eine Auflage für einen Handapparat 4 des Fernsprechendgerätes 1. Dies wird dadurch erreicht, daß der Bügel 3 breiter als das Fernsprechendgerät 1 ausgebildet ist und der resultierende überstehende Teil des Zapfens 5 als Auflage genutzt wird. Darüber hinaus ist der Bügel 3 im Fernsprechendgerät 1 so gelagert, daß er horizontal verschoben werden kann, wodurch eine einfache Verlagerung der Auflage auf die andere Seite des Fernsprechendgerätes 1 und somit die Lösung der Links-/Rechtshänder-Problematik erreicht wird.

Fig. 2 zeigt einen Ausschnitt der Anordnung aus Fig. 1 in einer Ansicht von unten. Gleiche Teile sind mit den gleichen Bezugszeichen versehen. Die rechteckige Form des Bügels 3 ist an der innerhalb des Fernsprechendgerätes 1 liegenden Längsseite unterbrochen, woraus die zwei zueinanderweisenden Zapfen 5 resultieren. Ein solcher Bügel 3 läßt sich beispielweise leicht durch mehrfaches rechtwinkliges Abbiegen eines geeigneten Metallstrangs herstellen. Die Lagerung der Zapfen 5 des Bügels 3 innerhalb des Fernsprechendgerätes 1 erfolgt durch zwei an die innere Seitenwand des Fernsprechendgerätes 1 angrenzende Klemmgesperre, die jeweils durch zwei gegenüberliegende Klemmteile 7 und 8 gebildet werden, die die Zapfen 5 umschließen. Der Anpreßdruck zwischen den Klemmteilen 7 und 8 und somit die auf die dazwischenliegenden Zapfen 5 wirkenden Reibungskräfte werden durch zwei Schrauben 9 erzeugt.

Durch unterschiedlich starkes Anziehen dieser Schrauben 9 können die auf den Bügel wirkenden Reibungskräfte variiert bzw. ausgesetzt werden. Durch diese Art der Lagerung und Arretierung wird zum einen eine stufenlose Verstellbarkeit des Anstellwinkels des Bügels 3 und zum anderen eine problemlose Verlagerung der Auflage auf die andere Seite des Fernsprechendgerätes 1 durch Lösen der Schrauben 9, Verschieben des Bügels 3 und anschließendem Wiederfestziehen der Schrauben 9 ermöglicht.

## Patentansprüche

1. Fernsprechendgerät (1) mit einem Fernsprechhörer (4) und einem im wesentlichen rechteckig geformten Bügel (3), der zwei zueinanderweisende, seitlich in das Fernsprechendgerät (1) eingreifende Zapfen (5) aufweist und über diese Zapfen (5) im Fernsprechendgerät (1) schwenkbar gelagert sowie durch Arretierungsmittel fixierbar ist,
dadurch gekennzeichnet,
daß der Bügel (3) zur Bildung einer Auflage für den Fernsprechhörer (4) seitlich am Fernsprechendgerät (1) übersteht.

2. Fernsprechendgerät nach Anspruch 1,
dadurch gekennzeichnet,
daß der Bügel (3) horizontal verschiebbar gelagert ist.

3. Fernsprechendgerät nach einem der Ansprüche 1 oder 2,
dadurch gekennzeichnet,
daß das Fernsprechendgerät (1) ein schwenkbar gelagertes Anzeigemittel (2) aufweist.

4. Fernsprechendgerät nach Anspruch 3,
dadurch gekennzeichnet,
daß eine durch den Bügel (3) im Fernsprechendgerät (1) gebildete Achse zugleich die Achse des schwenkbar gelagerten Anzeigemittels (2) bildet.

5. Fernsprechendgerät nach einem der vorhergehenden Ansprüche,
dadurch gekennzeichnet,
daß die Arretierungsmittel durch Rastgesperre gebildet werden.

6. Fernsprechendgerät nach einem der Ansprüche 1 bis 4,
dadurch gekennzeichnet, daß die Arretierungsmittel durch Klemmgesperre (7, 8) gebildet werden.

## Claims

1. A telephone receiver station (1) with a handset (4) and a substantially rectangular bracket (3) which comprises two facing studs (5) which enter the telephone receiver station (1) sideways and by means of which the bracket (3) is pivotably journalled in the telephone receiver station (1), and which bracket can be fixed by locking means, characterized in that the bracket (3) projects sideways from the telephone receiver station (1) so as to form a rest for the handset (4).

2. A telephone receiver station as claimed in Claim 1,
characterized in that the bracket (3) is journalled with horizontal sliding possibility.

3. A telephone receiver station as claimed in Claim 1 or 2, characterized in that the telephone receiver station (1) has a display (2) which is pivotably journalled.

4. A telephone receiver station as claimed in Claim 3, characterized in that an axis defined by the bracket (3) in the telephone receiver station (1) at the same time forms the pivot axis for the pivotably journalled display (2).

5. A telephone receiver station as claimed in any one of the preceding Claims,
characterized in that the locking means are formed by detents.

6. A telephone receiver station as claimed in any one of the Claims 1 to 4,
characterized in that the locking means are formed by clamps (7,8).

## Revendications

1. Terminal de télécommunication (1) comprenant un combiné téléphonique (4) et un étrier (3) de forme sensiblement rectangulaire, qui comporte deux broches (5) tournées l'une vers l'autre et s'engageant latéralement dans le terminal de télécommunication (1) et qui peut être monté à pivotement via ces broches (5) dans le terminal de télécommunication (1) et être fixé par des moyens d'arrêt, caractérisé en ce que l'étrier (3) dépasse latéralement du terminal de télécommunication (1) pour former un support pour le combiné téléphonique (4).

2. Terminal de télécommunication selon la revendication 1, caractérisé en ce que l'étrier (3) est monté déplaçable horizontalement.

3. Terminal de télécommunication selon la revendication 1 ou 2, caractérisé en ce que le terminal de télécommunication (1) comporte un moyen d'affichage (2) monté à pivotement.

4. Terminal de télécommunication selon la revendication 3, caractérisé en ce que l'axe formé par l'étrier (3) dans le terminal de télécommunication (1) forme également l'axe du moyen d'affichage (2) monté à pivotement.

5. Terminal de télécommunication selon l'une quelconque des revendications précédentes, caractérisé en ce que les moyens d'arrêt sont formés par des arrêts à crans.

6. Terminal de télécommunication selon l'une quelconque des revendications 1 à 4, caractérisé en ce que les moyens d'arrêt sont formés par des arrêts à serrage (7, 8).
